# EUROPÄISCHE PATENTSCHRIFT

(11) **EP 0 577 647 B1**
(45) Veröffentlichungstag und Bekanntmachung des Hinweises auf die Patenterteilung: **14.06.1995**
(21) Anmeldenummer: 92906831.0
(22) Anmeldetag: 24.03.1992
(51) Int. Cl.: F24J 2/00, F24J 2/34, E04B 1/74

(54) **WÄRMEDÄMMUNG MIT WÄRMESPEICHER**
THERMAL INSULATION WITH HEAT-STORAGE ELEMENT
ISOLATION THERMIQUE A ACCUMULATEUR DE CHALEUR

(30) Priorität: 27.03.1991 DE 4110116
(43) Veröffentlichungstag der Anmeldung: 12.01.1994
(73) Patentinhaber: THERMODACH$DACHTECHNIK GMBH, D-95679 Waldershof (DE)
(72) Erfinder: HELFRECHT, Manfred, D-95679 Waldershof (DE)
(74) Vertreter: Fleuchaus, Leo, Dipl.-Ing.
(86) Internationale Anmeldenummer: EP9200650
(87) Internationale Veröffentlichungsnummer: WO9217741

(56) Entgegenhaltungen:
- EP-A- 0 095 187
- WO-A-85/01079
- DD-A- 241 759
- DE-A- 2 506 332
- FR-A- 2 400 088
- FR-A- 2 537 248
- GB-A- 1 302 839
- US-A- 4 259 401
- PATENT ABSTRACTS OF JAPAN vol. 7, no. 269 (M-259) 30. November 1983, & JP-A-58 148 348 (MATSUSHITA DENKO K.K.) 3. September 1983

## Beschreibung

Die Erfindung betrifft ein Dach mit einer Wärmedämmung gemäß dem Oberbegriff des Hauptanspruches.

Die dramatische Erhöhung der Ölpreise während der Ölkrise hat die Aufmerksamkeit der Öffentlichkeit stark auf Energiekosten gelenkt. Zusätzlich führt das gesteigerte Umweltbewußtsein in den letzten Jahren dazu, daß vermehrt das Verbrennen von fossilen Brennstoffen vermieden werden soll, um die Erdatmosphäre von weiteren Belastungen freizuhalten. Daraus ergibt sich ein verstärkter Einsatz von Wärmedämmmethoden, um möglichst wenig Wärme aus einem geheizten Raum an die Umgebung abzuführen.

Wärmedämmung wird üblicherweise durch Schichten von Wärmedämmmaterialien zwischen dem Mauerwerk oder an dem Mauerwerk bewirkt. Solche Wärmedämmmaterialien können z.B Glaswolle oder Styropor bzw. andere geschäumte Dämmmaterialien sein. Die Dicke der Schicht und der Wärmeleitwert bestimmen die Wärmemenge, die nach außen abfließen kann.

Mit der Dicke der Wärmedämmschicht sinkt der abgeführte Wärmestrom. Eine möglichst große Dicke ist also erwünscht. Dies ist aber nicht unbegrenzt möglich. Sehr dicke Wärmedämmschichten würden unnötig Raum wegnehmen. Außerdem ist dies aus Kostengründen und wegen der umweltbelastenden chemischen Prozesse bei der Herstellung geschäumter Dämmmaterialien nicht möglich.

Für die herkömmliche Technik der Wärmedämmung ist somit eine Grenze durch die Dicke von Isoliermaterialien gegeben. Bei Überschreiten dieser Grenze würden die daraus resultierenden Probleme größer als der Nutzen durch weniger Energieverbrauch sein.

Durch die WO-A-8 501 079 ist bereits bekannt, als Latentspeicher ausgestaltete wärmespeichernde Einheiten im Innern eines Daches anzuordnen, um den Wärmedurchgangskoeffizienten der Dämmung zu beeinflussen. Wie jedoch zum Ausdruck gebracht, war es bisher nicht möglich, eine funktioneil wirksame Einheit mit einem Latentspeicher zu produzieren. Dies dürfte insbesondere deshalb der Fall sein, da das verwendete Glaubersalz seinen Phasenübergang vom flüssigen zum festen Zustand und umgekehrt nicht bei den im Tagesverlauf üblichen Temperaturschwankungen durchläuft.

In der GB-A-1 302 839 ist eine Paneele sowohl für den Dach- als auch für den Wandbereich beschreiben, bei der ein wärmeisolierendes Medium in einem hohlen Innenraum angebracht ist, der von Wandflächen begrenzt ist. Die Hauptflächen grenzen an Bereiche unterschiedlicher Temperatur. Zwischen den Wänden der Paneele mit unterschiedlicher Temperatur ist eine Gasfullung vorgesehen, die dazu dient, die thermische Leitfähigkeit in der Paneele zwischen einer hohen Wärmedurchgängigkeit und einer niederen Wärmedurchgängigkeit zu verändern. Um die Wirkungsweise zu verbessern, sind ferner in den Paneelen kristalline Substanzen vorgesehen, die durch einen Phasenübergang entweder Wärmeenergie aufnehmen zum Zwecke der Kühlung oder zum Zwecke der Heizung Wärmeenergie abgeben.

Der Erfindung liegt die Aufgabe zugrunde, eine Wärmedämmung zu schaffen, bei der ohne wesentliche Verstärkung der Dämmstoffdicken die Wärmedämmung wirkungsvoll verbessert werden kann.

Die Aufgabe wird erfindungsgemäß durch ein Dach mit einer Wärmedämmung nach Anspruch 1 gelöst.

Vorteilhafte Weiterbildungen sind in den abhängigen Unteransprüchen angegeben.

In einem erfindungsgemäßen Dach sind wärmespeichernde Materialien oder Einheiten eingebaut. Diese Materialien oder Einheiten können tagsüber Wärme aufnehmen, die sie nachts abgeben. Werden diese wärmespeichernden Materialien außerhalb der Isolierung angebracht, herrscht durch die gespeicherte Energie außerhalb des Isoliermaterials nachts eine höhere Temperatur als ohne diese speichernden Elemente. Da der Wärmefluß proportional zur Temperaturdifferenz ist, bedeutet das, daß durch die Anhebung der Außentemperatur der Abfluß der Wärme durch die wärmespeichernden Materialien vom Innenraum zum Außenraum reduziert wird.

Auch innerhalb der Wärmedämmung angebrachte wärmespeichernde Materialien oder Einheiten sind von Vorteil, da die aufgenommene und gespeicherte Wärmeenergie bei einer Abkühlung der Innenräume wieder vorzugsweise nach innen abgegeben wird, was das Gefühl der Behaglichkeit wesentlich verbessert.

Besonders vorteilhaft läßt sich die Erfindung ausführen, wenn als wärmespeicherndes Material ein Material dient, das bei üblichen Außentemperaturen als Latentspeicher wirkt. Bei Latentspeichern benutzt man die bei einer Phasenänderung auftretende Energieänderung dazu, Energie zu speichern. Üblicherweise wird als Phasenänderung der Übergang vom festen Aggregatzustand zum flüssigen Aggregatzustand gewählt. Die zugehörige Energie wird als Schmelzwärme bezeichnet und liegt üblicherweise in der Größenordnung von mehreren 100 Joule/g.

Ein Latentspeicher hat den Vorteil, daß er längere Zeit, nämlich so lange bis der Energiestrom für eine Phasenumwandlung ausreicht, dieselbe Temperatur, nämlich die Schmelzpunkttemperatur, aufrechterhält.

Für Latentspeichermaterialien im üblichen Temperaturbereich können Salzhydrate oder eutektische Mischungen von diesen benutzt werden. Besonders Calciumchlorid oder Natriumsulfat mit Schmelzpunkten im Bereich von 30° C sind in diesem Zusammenhang interessant. Ein geläufiges Latentspeichermaterial ist Wasser, das im Gefrierpunkt 0°C eine Schmelzwärme von 333 Joule/g aufweist. Man ersieht aus diesen Beispielen, daß eine Vielzahl von Latentspeichermaterialien geeignet ist, je nachdem bei welcher Temperatur man den Latentspeicher betreiben will. Für Gegenden, bei denen die Temperatur sehr stark schwankt, wird man vorteilhafterweise mehrere Schichten oder Elemente mit verschiedenen Latentspeichermaterialien verwenden, wobei je nach Temperaturlage jeweils ein anderer Latentspeicher der Anordnung aktiv ist. Die Energieströmung wird dann vorteilhaft verringert, wenn die Speichermedien in Reihenfolge ihrer Schmelztemperatur angeordnet sind, wobei das Medium mit der niedrigsten Schmelztemperatur an der Außenseite zu liegen kommen sollte. So läßt sich für verschiedene unterschiedliche Bedingungen jeweils ein optimales Speicherverhalten erzielen.

Will man auch die Wärmeabgabe des Latentspeichers selbst an die Außenwelt reduzieren, kann man auch zwischen Latentspeicher und den kälteren Raumbereich eine Isolierschicht vorsehen. Dabei kann der Latentspeicher vom Isoliermaterial umgeben sein . Diese Anordnung hat aber den Nachteil, daß der Latentspeicher schlechter geladen werden kann. Daher sollte der Speicher nach außen d.h. zur kälteren Seite nur mit einer dünnen Isolierschicht abgedeckt werden, die im wesentlichen nur die Konvektion verhindert. Ansonsten sollte der Speicher möglichst weit außen liegen. Für einen möglichst hohen Wirkungsgrad ist es zweckmäßig, Speicherelemente möglichst flächendeckend zu verlegen.

Die Latentspeicherentwicklung ist bisher auf große Schwierigkeiten gestoßen. Die eine Schwierigkeit besteht darin, daß, wenn man Latentspeicher als reine Wärmespeicher benutzen will, die Feststoffe eine isolierende Schicht bilden, die dafür sorgen, daß die von der Flüssigkeit beim Frieren abgegebene Wärmemenge nicht mehr an die Außenwände dringt, wodurch diese Speicher ineffektiv werden. In der hier angesprochenen Anwendung ist jedoch eine zusätzliche wärmeisolierende Schicht vorteilhaft, weil sich so nach Abgabe der Schmelzwärme automatisch eine bessere Wärmeisolierung einstellt.

Die zweite Schwierigkeit besteht darin, daß bei der Verfestigung aus der Flüssigphase Keimzentren vorhanden sein müssen, an denen die Kristallisation stattfindet. Andernfalls findet eine Unterkühlung statt und die Schmelzwärmeenergie wird nicht an die Umgebung abgegeben. Für derartige Keimbildungszentren sind spezielle Substanzen in die Latentspeicher einzubringen, die als Keimzentren dienen können. Solche Substanzen können Öle sein, die sich auch durch die Konvektion innerhalb der Flüssigkeit gut verteilen.

Essigsäure ist ein mögliches Latentspeichermaterial für die erfindungsgemäβe Anwendung, da ihr Schmelzpunkt bei 16,6 °C liegt. Diese Substanz hat außerdem die Eigenschaft, daß man den Schmelzpunkt durch Zusatz von wenig Wasser beliebig senken kann. So ist bei 99%iger Essigsäure der Schmelzpunkt 14,7 °C und bei 98%iger liegt erbei 13,2 °C. Die Essigsäure ist mit Wasser, Alkohol, Äther, Tetrachlormethan, Chloroform, Glyzerin und ätherischen Ölen in jedem Verhältnis mischbar, so daß man je nach Anwendung Mischungen nach Bedarf herstellen kann. Die Herstellungsmethode von Essigsäure mit Hilfe von Essigbakterien ist ein rein biologisches Verfahren, so daß man nicht erwarten kann, daß die Herstellung eines Latentspeichers mit Essigsäure als wesentlichem Bestandteil die Umwelt wesentlich nachteilig beeinflußt. Problematisch ist, daß die Essigsäure Kalk und verschiedene Metalle löst, jedoch ist Aluminium sehr widerstandsfähig und es wäre möglich, einen Latentspeicher aufzubauen, der im wesentlichen ein Aluminiumtank ist, in dem sich Essigsäure oder eine verdünnte Essigsäure befindet. Anstelle von Aluminium ist auch die Verwendung von speziellen Kunststoffen vorgesehen.

Wie wirksam ein derartiger Latentspeicher ist, läßt sich direkt aus folgender Abschätzung ersehen. Bei einer 1cm dicken Glaswolleschicht und einer Temperaturdifferenz von 20°C gehen innerhalb einer Zeit von 10 Std. pro m² 600 Kilokalorien verloren. Bei einer Schmelzwärme von ungefähr 200 Joule/cm³ ist in einem 1cm dicken Latentspeicher eine Energie von 470 Kilokalorien/m² gespeichert. Das bedeutet, in einem Zentimeter Latentspeicherdicke ist bei der Schmelztemperatur mehr Energie gespeichert als über eine 2 cm dicke Glaswolleschicht aus dem Raum abfließt. Die aus dem Raum abfließende Wärme kann also praktisch vollständig unterbunden werden. Wichtig ist dabei jedoch, daß die Schmelztemperatur innerhalb eines Temperaturbereichs liegt, der auch tagsüber an der Wand erreicht wird.

Die Maßnahmen der Erfindung zeigen aber auch eine beachtliche Verbesserung der Wärmedämmung, wenn anstelle von Latentspeichern nur einfache Wärmespeicher mit gut wärmespeichernden Materialien Verwendung finden.

Es ist güngstig, den Speicherelementen einen dreieckigen Querschnitt zu geben, so daß die Speicherelemente den Hohlraum zwischen Dacheindeckungsplatten und Isoliermaterial gut ausfüllen. Abgekantete Randstreifen an den Speicherelementen können dazu benutzt werden, die Speicherelemente an den Dachlatten oder Wärmedämmelementen einzuhängen. Dies ermöglicht ein einfaches und kostengünstiges Verlegen auf dem Dach.

Innenliegende Speicherelemente können zwischen den Dachlatten, zwischen den Dachsporren und den an den Dachlatten eingehängten Wärmedämmelementen angeordnet sein, wobei im Falle der Verwendung innenliegende Folienschalen, die Speicherelemente in die Folienschale integriert sein können.

Es ist bekannt, daß bei üblichen Latentspeichermaterialien die Phasenänderung, die ja die Speicherung bewirkt, auch zu Volumenänderungen führt. Diese können kompensiert werden, wenn elastisches Material zur Aufnahme des Latentspeichermaterials benutzt wird. Mit eingebauten Bälgen ist es dann möglich, die Volumenexpansion gezielt in Längenexpansionen umzusetzen. Zusätzlich können Sicken in den Wandungen des Speicherbehälters angebracht sein, um spezielle Flächen der Speicherelemente zu stabilisieren, damit die durch die Volumenexpansion auftretenden Kräfte die Wärmedämmung und eventuell die Ziegelauflage nicht beeinträchtigen. So könnte z.B. bei einer Dacheindeckung die Volumenexpansion dazu führen, daß Dacheindeckungsplatten abgehoben werden. Eine Versteifung des Speicherbehälters unterhalb der Dacheindeckungsplatten führt zu einer Verringerung dieses Effekts. Weiter sollen bei der speziellen Ausführung der Latentspeicherelemente Hohlräume vorgesehen werden, in die das Material aufgrund der Volumenexpansion ausweichen kann.

Selbstverständlich sind die Maßnahmen der Erfindung nicht nur im Dachbereich sondern auch an allen Außenwänden eines Gebäudes analog anwendbar, wobei nur die Befestigung und das Haltern der Speicherelemente der Anwendung anzupassen sind. Aus der Fassadentechnik sind hierfür Maßnahmen umfangreich bekannt.

Weitere Merkmale und Vorteile der Erfindung ergeben sich auch aus den nachfolgenden Ausführungsbeispielen in Verbindung mit den Ansprüchen und der Zeichnung. Es zeigen:
- Fig. 1: den Temperaturverlauf bei einer Wärmedämmung nach dem Stand der Technik;
- Fig. 2: den Temperaturverlauf bei einer erfindungsgemäßen Wärmedämmung;
- Fig. 3: ein erfindungsgemäßes Dach mit einer Wärmedämmung;
- Fig. 4: ein andere Ausführungsform der Erfindung;
- Fig. 5: eine weitere erfindungsgemäße Ausführung für eine Dachisolierung;
- Fig. 6: eine weitere erfindungsgemäβe Ausführung für eine Dachisolierung;
- Fig. 7: eine schematische Darstellung einer Wandausführung für ein Latentspeicherelement.
- Fig. 8: eine weitere erfindungsgemäβe Ausführung für eine Dachisolierung ähnlich der in Fig. 6 aber mit im wesentlichen dreieckigem Querschnitt der außen liegenden Speicherelemente;
- Fig.9: ein Beispiel für die Zusammensetzung eines Latentspeicherelementes mit im wesentlichen dreieckiger Fläche aus einer Grundfläche und einem Tiefziehteil;
- Fig. 10: das Latentspeicherelement in endgültiger Form, wie es nach dem Zusammenbau gemäß Fig. 9 Verwendung findet;
- Fig. 11: ein Latentspeicherelement mit im wesentlichen dreieckigem Querschnitt zur Demonstration verschiedener Maßnahmen zur Erhöhung der Stabilität und Führung der durch Phasenänderung erzeugten Volumenexpansion;
- Fig. 12: eine erfindungsgemäße Ausfürung einer Dachisolierung mit in das Wärmedämmelement integrierten Speicherelementen.

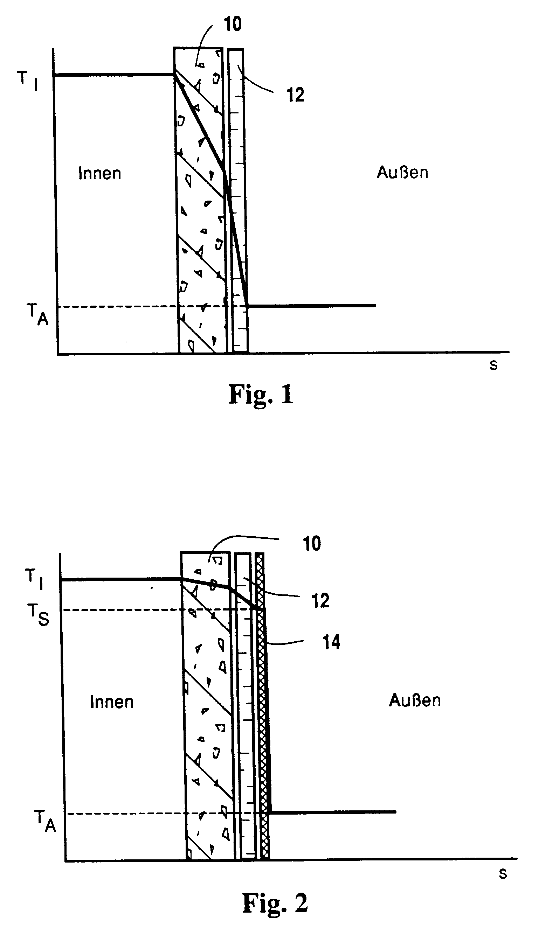

Fig. 1 und 2 zeigen die Temperaturverläufe entlang einer Ortskoordinaten s zwischen einem Innenraum und einem Außenraum. Die Innentemperatur ist in den Diagrammen mit T_{I} und die Außentemperatur mit T_{A} gekennzeichnet. Eine Betonwand 10 trennt Innenraum von Außenraum. Zur Wärmedämmung ist auf der Betonwand eine Isolierschicht 12 aufgebracht. Der gezeigte unterschiedliche Temperaturgradient kommt dadurch zustande, daß die Isolierschicht die Wärme schlechter leitet als die Betonwand. Damit wird der Energieverlust verringert. In Fig. 2 ist vor der Isolierschicht 12 noch eine Speicherschicht 14 angeordnet. Die Speicherschicht wird bei höheren Temperaturen z.B. tagsüber aufgeheizt, so daß sie sich auf der Temperatur T_{S} befindet. Dadurch liegt an der Kombination Betonwand 10 und Isolierschicht 12 eine kleinere Temperaturdifferenz an als beim Beispiel gemäß Fig. 1. Damit wird der Wärmestrom reduziert. Dafür gibt nun aber das Speicherelement 14 Energie an den Außenraum ab, was vor allem in Fig. 2 durch den hohen Temperatursprung T_{S} zu T_{A} möglich und deutlich wird. Deswegen ist es notwendig, daß die Speicherschicht eine hohe Wärmekapazität besitzt, um die Temperatur T_{S} möglichst lange auf einem hohen Wert halten zu können. Für diese Anwendung bieten sich neben einfachen Speichermaterialien mit hoher Wärmekapazität auch Latentspeicher an, die den Vorteil haben, daß sie bei einem Phasenübergang große Energiemengen aufnehmen und speichern können. Üblicherweise wird ein Phasenübergang flüssig-fest benutzt, wobei die Temperatur T_{S} die Schmelztemperatur ist. Diese Schmelztemperatur ist im wesentlichen durch die verwendete Substanz bestimmt. So hat Wasser einen Schmelzpunkt bei 0°C, CaCl₂ x 6H₂O bei 29,2°C und Na₂SO₄ x 10H₂O bei 32,4°C. Andere Schmelztemperaturen kann man durch Mischungen erzielen, dabei sind speziell eutektische Mischungen von Interesse.

Für die in mittleren Breiten vorherrschenden Temperaturen ist u.a. auch Essigsäure einsetzbar, die bei unterschiedlichen Wassergehalten für unterschiedliche Schmelzpunkte zwischen 0°C und 16,4°C einstellbar ist. Nachteilig für Essigsäure ist allerdings, daß es die meisten Substanzen angreift. Sie läßt sich jedoch in speziellen Kunststoffbehältern aber auch in Aluminiumbehältern aufbewahren.

Bei solchen Latentspeichern ist vor allem zu beachten, daß bei dem Phasenübergang von flüssig nach fest und umgekehrt eine Volumenänderung stattfindet. Man muß daher einen Freiraum lassen, damit der dadurch entstehende Volumen- und Druckunterschied ausgeglichen wird.

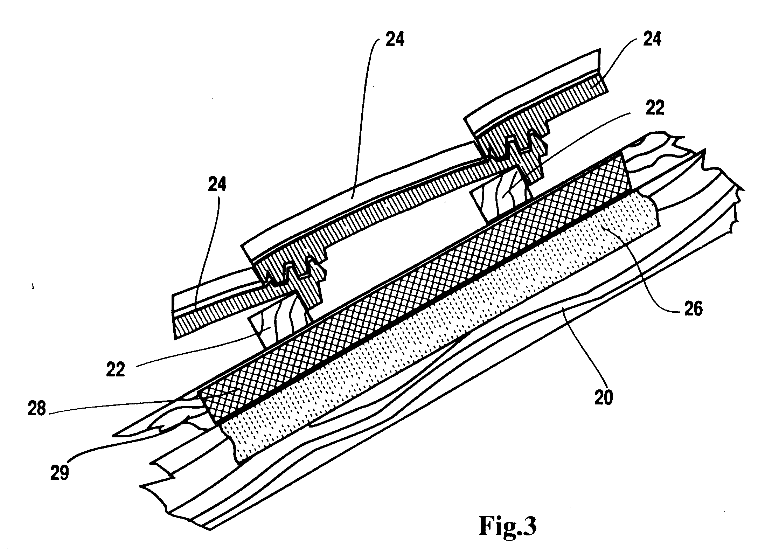

In Fig. 3 ist eine Wärmedämmung gezeigt, bei der das Prinzip der Fig. 2 an einer Dacheindeckung verwirklicht ist.

Es ist ein Dachaufbau dargestellt, bei dem Dachsparren 20 und Dachlatten 22 im Abstand voneinander angeordnet sind. Zur Abstandhaltung sind Konterlatten 29 zwischen Sparren 20 und Latten 22 eingefügt. Dacheindeckungsplatten 24 sind in die Dachlatten eingehängt und greifen übereinander, so daß sich eine gleichmäßige Überdeckung ergibt. Derartige Aufbauten sind dem Fachmann bekannt und benötigen keine weiteren Erläuterungen.

Nach dem Stand der Technik wird eine Wärmedämmschicht zwischen Latten 22 und Sparren 20 angebracht. Die Erfindung sieht dagegen eine dünnere Wärmedämmschicht 26 zwischen benachbarten Sparren vor und darüber ein Latentspeicherelement 28. Nach dem oben ausgeführten Zahlenbeispiel kann bei der Verwendung eines Latentspeicherelements 28 dieses wesentlich dünner als die Wärmedämmschicht 26 ausgebildet sein und trotzdem noch eine effektive Wirkung haben.

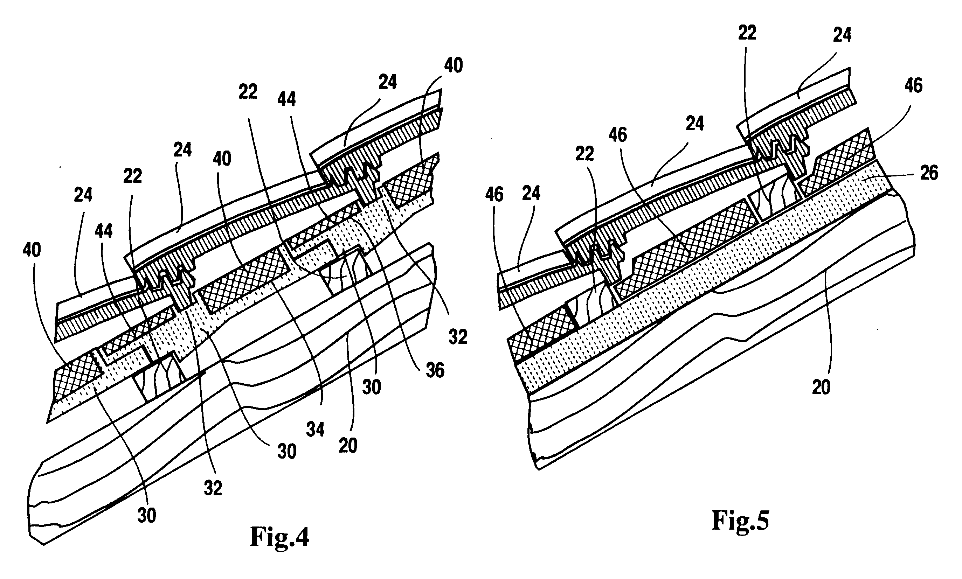

Eine andere Ausführung ist in Fig. 4 gezeigt, bei der Wärmedämmelemente 30 benutzt werden, deren Form sich vorteilhaft für eine Wärmedämmung bei Dächern erwiesen hat. Die Dachlatten 22 sind hierbei direkt auf die Dachsparren 20 aufgenagelt. Darüber liegen die Wärmedämmelemente 30. Diese Elemente sind so geformt, daß sie sich an den Latten 22 abstützen und miteinander überlappen, um so eine lückenlose deckende Schicht zu bilden. In Aussparungen 32 sind die Dacheindeckungsplatten 24 abgehängt. Die Erfindung ist hier durch eine besondere Ausgestaltung der Wärmedämmelemente 30 verwirklicht. In den Elementen 30 sind erfindungsgemäβ Aussparungen 34 und 36 vorgesehen, in die Speicherelemente, vorzugsweise Latentspeicherelemente 40 und 44, eingesetzt sind. Dabei können die Wärmedämmelemente mit den vorgefertigten Aussparungen 32 und 34 nachträglich mit Speicherelementen ausgerüstet werden. Es bietet sich aber auch an, die Wärmedämmelemente 30 bei der Herstellung mit integrierten Speicherelementen zu versehen.

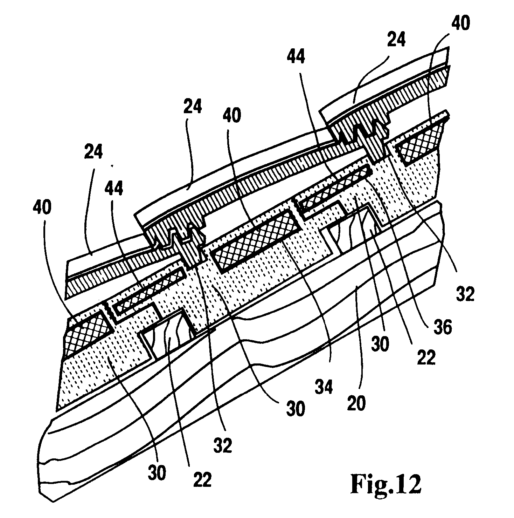

Für die Integration von Speicherelementen bietet sich an, eine Vielzahl von einzelnen Speicherelementen in jedes Wärmedämmelement einzuschäumen, wobei die Speicherelemente z.B. Beutel- oder Kugelform haben können. Bei einer solchen Vielzahl von integrierten Speicherelementen in einem Wärmedämmelement ist auch vorgesehen, die einzelnen Speicherelemente mit Materialen zu füllen, die unterschiedliche Wärmespeichereigenschaften oder unterschiedliche Schmelztemperaturen, d.h. Phasenübergänge haben. Aufbau der erwähnten Art geht auch aus Fig. 12 hervor. Derartige Wärmedämmelemente mit integrierten Speicherelementen werden als besonders vorteilhaft angesehen, da sie besonders einfach zu verlegen sind und die in das Wännedämmmaterial eingebetteten Speicherelemente verhältnismäßig einfach und billig herstellbar sind.

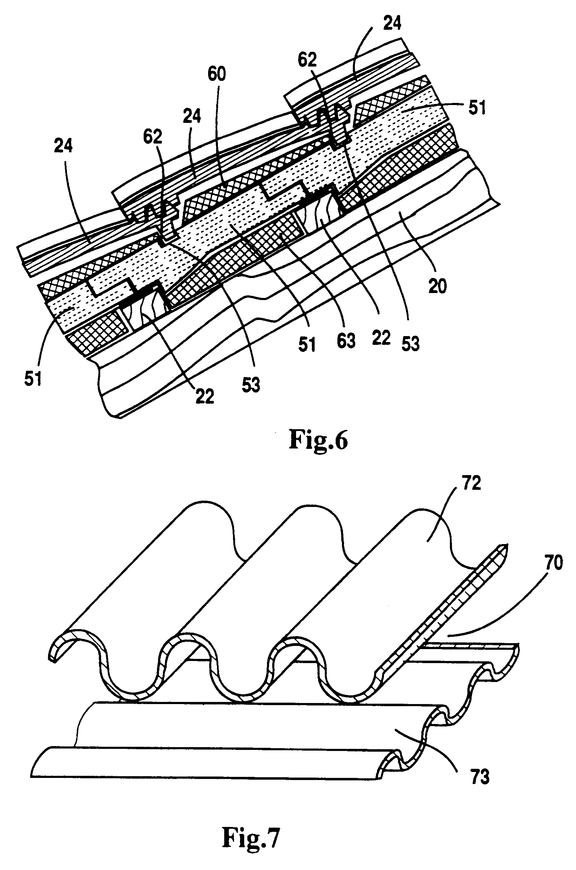

Wie die erfindungsgemäβen Maßnahmen bei schon vorhandenen Dächern verwirklicht werden können, geht aus den Beispielen gemäß Fig. 5 und Fig. 6 hervor. Fig. 5 zeigt einen Dachaufbau mit zusätzlichen Latentspeicherelementen. Dabei sind Dachlatten 22 im Abstand auf den Dachsparren 20 auf einer Konterlattung angebracht. Zwischen den Dachlatten 22 und den Dachsparren 20 befindet sich die Wärmedämmschicht 26. Die Dacheindeckungsplatten 24 greifen übereinander und sind in die Dachlatten 22 eingehängt. Zusätzlich zu dem bekannten Aufbau sind Latentspeicherelemente 46 zwischen die Dachlatten eingelegt. Es wird daraus deutlich, daß man auch nachträglich Latentspeicher in wärmegedämmte Dachaufbauten einbauen kann.

Der in Fig. 6 gezeigte Aufbau gestattet ebenfalls einen nachträglichen Einbau von Latentspeicherelementen in einen schon vorhandenen Dachaufbau. Bei dem Aufbau gemäß Fig. 6 sind wieder Dachlatten 22 auf Sparren 20 vorgesehen. Zur Wärmedämmung werden Styroporelemente 51 verwendet, die sich gegenseitig überlappen und eine geschlossene Wärmedämmschicht bilden. In Aussparungen 53 vorgesehen sind Dachziegel 24 eingehängt. Als Speicherelemente werden hier Latentspeicherelemente 60 verwendet, die mit einem abgewinkeltem Randstreifen 62 in die Aussparungen 53 eingreifen.

In Fig. 6 ist auch ein innenliegendes Speicherelement 63 dargestellt, das z.B. in einer tiefgezogenen Folienschale bekannter Ausführung ausgebildet sein kann.

Bei diesem Aufbau kann z.B. der außenliegende Speicherelement 60 als Latentspeicher und das innenliegende Speicherelement als einfacher Wärmespeicher ausgebildet sein.

Bei allen vorgenannten Beispielen können sich die Speicherelemente bzw. die Latentspeicherelemente tagsüber mit Energie aufladen. Die Wärmeaufnahme geschieht dort im wesentlichen durch die Umgebungstemperatur. Diese kann bei sonnigen Wintertagen, wenn die Sonne direkt auf die Dacheindeckungsplatten 24 scheint, sehr hoch sein, so daß sich eine starke Reduzierung des Wärmeverlustes ergibt. In der Nacht gibt der Speicher die Energie wieder an die Umgebung ab, wodurch an der Außenseite der Isolierschicht eine höhere Temperatur eingestellt wird als sie der Außentemperatur entspricht. Da der Wärmeabfluß abhängig von der Temperaturdifferenz ist, ergibt sich nur ein geringer Wärmeverlust aus dem Inneren des Gebäudes.

Befindet sich an der Innenseite der Wärmedämmung ein einfacher Wärmespeicher so wird dadurch die Behaglichkeit des Raumes verbessert, da dieser im wesentlichen die zuvor aus dem Innenraum aufgenommene Energie wieder an diesen abgibt.

Die Latentspeicher sind auch in Sommerzeiten vorteilhaft, da sie so lange die Außentemperatur auf der Schmelztemperatur halten, bis die Latentwärmespeicher ihre Energie voll aufgenommen haben. Solange wirken sie auch als Kühlelemente unter den Dacheindeckungsplatten. Auf diese Art und Weise gleichen die Latentspeicher große Temperaturdifferenzen über den Tag hin aus.

Die vorher erwähnten Latentspeicherelemente können einfache Elemente sein, die in einem Innenraum das Latentspeichermedium, z.B. Essigsäure, enthalten.

Wichtig ist bei der vorzusehenden Behälterform jedoch, daß sich Druckunterschiede leicht ausgleichen lassen. Druckunterschiede entstehen vor allem dadurch, daß bei der Änderung des Aggregatzustands eine Volumenänderung stattfindet. Dies kann man einmal dadurch berücksichtigen, daß man Hohlräume freiläßt, die den Druck teilweise kompensieren, oder aber flexible Kunststoffmaterialien benutzt, wie bei den bekannten Kühlakkus, die sich mit der Volumenexpansion zusammen vergrößern. Um eine stabile Lage der Dacheindeckungsplatten 24 gewährleisten zu können, darf die Volumenexpansion des Gesamtelements aber nicht zu groß sein.

In Fig. 7 ist schematisch und nicht maßstäblich gezeigt, wie derartige Forderungen erfüllt werden können. Ausschnitte der Oberseite 72 eines Latentspeichers und der Unterseite 73 sind schematisch dargestellt. Zwischen beiden Seiten befindet sich das Latentspeichermedium 70. Oberseite 72 und Unterseite 73 können aus einem elastischen Material bestehen, welches Volumenänderungen auffangen kann. Die Versteifung der Elemente wird durch eine wellenförmige Ausführung der Oberseite 72 und der Unterseite 73 gewährleistet. Dadurch, daß Oberseite 72 und Unterseite 73 in aufeinander senkrechten Richtungen gewellt ausgeführt sind, ergibt sich eine Versteifung in zwei Richtungen.

Die Ausführungsform von Latentspeicherelementen, wie sie in Zusammenhang mit Fig. 7 beschrieben wurde, hat zusätzlich den Vorteil, daß die Unterseite 73 nur in einigen Punkten auf der Wärmedämmschicht aufliegt, so daß eine gute Belüftung zwischen Isolierschicht und Speicherschicht gewährleistet wird und eventuell eindringende Feuchtigkeit das Dach nicht beschädigen kann.

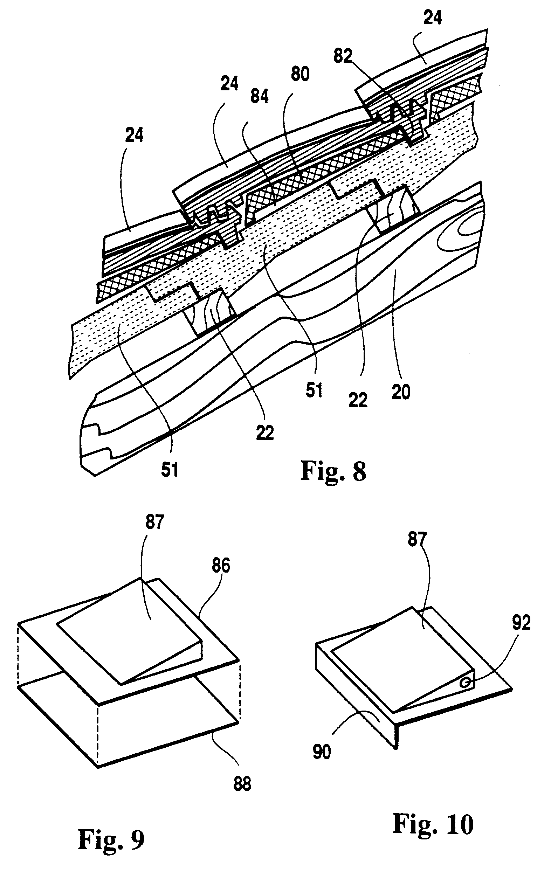

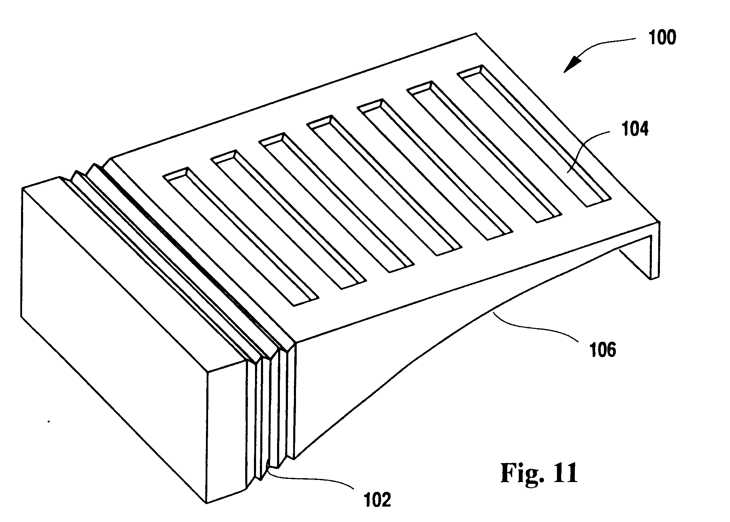

In Fig. 8 ist ein ähnlicher Dachaufbau gezeigt, wie er schon aus Fig. 6 bekannt ist. Die Latentspeicherelemente 80 haben in dieser Ausführungsform einen im wesentlichen dreieckigen oder trapezförmigen Querschnitt, wodurch der Raum zwischen den Dacheindeckungsplatten 24 und den Wärmedämmelementen 51 besser ausgefüllt ist. Auch hier ist an den Latentspeichern 80 wieder ein abgewinkelter Randstreifen 82 vorgesehen. Durch die spezielle Form der Latentspeicherelemente 80 wird ein Hohlraum 84 zwischen dem Latentspeicherelement 80 und den Wärmedämmelementen 51 freigelassen. Dieser dient vor allem dazu, die Volumenänderung bei einer Phasenänderung des Latentspeichermaterials aufzunehmen. Durch spezielle versteifende Maßnahmen an der zur Dacheindeckungsplatte zeigenden Oberfläche ist es möglich, die erwartete Volumenexpansion so zu führen, daß sie im wesentlichen zur Ausfüllung des Hohlraumes 84 führt und die Dacheindeckplatten 24 nicht vom Dach abgehoben werden. Derartige Maßnahmen bei der Formung von Latentspeicherelementen werden später im Zusammenhang mit Fig. 11 diskutiert.

In Fig. 9 ist schematisch gezeigt, wie ein derartiges Latentspeicherelement mit dreieckiger Querschnittsfläche in einfacher Weise geformt werden kann. In einem Tiefziehteil 86 wird der zur Aufnahme des Latentspeichermaterials benötigte Behälter 87 ausgeprägt. Dieses Tiefziehteil 86 wird anschließend mit einer Grundplatte 88 verschweißt oder verklebt. Anschließend wird der Rand umgeknickt, so daß ein abgewinkelter Randstreifen 90 entsteht. Der Randstreifen 90 ist aus der Fig. 10 zu erkennen.

Der Behälterteil 87 wird mit einem Loch 92 versehen, durch das dann das Latentspeichermaterial eingefüllt werden kann. Das Loch wird anschließend mit einem Stopfen verschweißt oder verklebt. Bei der Herstellung derartiger Latentspeicherelemente ist darauf zu achten, daß diese vollständig dicht sind, damit das Latentspeichermaterial nicht ausläuft. Die schon erwähnten Latentspeichermedien können ja korrodierend wirken oder zu einer Geruchsbelästigung führen. Dies wird durch die Abdichtung verhindert. Die Speicherwirkung von Latentspeichern beruht im wesentlichen auf einer Phasenänderung z.B. vom flüssigen zum festen Aggregatzustand. Derartige Phasenänderungen sind mit Volumenänderungen gekoppelt, die zu unerwünschten Kräften auf die restlichen Teile der Wärmedämmung führen können. Deshalb sollte die Volumenänderung so gesteuert werden, daß die Kräfte möglichst klein sind oder nur gezielt auf spezielle Bereiche wirken.

Die einfachste Maßnahme, diese Volumenänderungen zu kompensieren, besteht darin, die Behälter der Latentspeicherelemente nur teilweise mit Latentspeichermaterial zu füllen. Andere Maßnahmen können konstruktiv vorgesehen werden, um die Volumenexpansion in bestimmte für den Aufbau unschädliche Richtungen zu zwingen. Derartige Maßnahmen sind beispielhaft in der Fig. 11 gezeigt. Das Latentspeicherelement 100 enthält z.B. einen Balg 102, so daß die Volumenexpansion im wesentlichen nur eine Längenänderung zur Folge hat. Weiter befinden sich Sicken 104 zur Versteifung an der Oberfläche, an der die Dacheindeckungsplatten aufliegen. Bei entsprechender Ausformung verhindern die Sicken durch die Stabilisierung der Oberfläche, daß die durch die Volumenänderung auftretende Kraftkomponenten die Dacheindeckungsplatten hochheben können. Die Kraftwirkung durch die Volumenexpansion richtet sich dann im wesentlichen nach unten, da das Material ausweicht. Dort ist eine Wölbung 106 vorgesehen, die von dem sich ausdehnenden Material nach unten gedrückt wird und so Raum zur Aufnahme des vergrößerten Volumens freigibt. Je nach Anwendungsfall und Einsatz der Erfindung können Bälge, Sicken und Wölbungen auch unabhängig voneinander bei Latentspeicherelementen eingesetzt werden.

Das erfindungsgemäße Dach hat den Vorteil, Energie zu sparen und außerdem durch Verringerung des benötigten Isoliermaterials insbesondere umweltfreundlich zu wirken. Die oben genannten Ausführungsbeispiele zeigen anhand von Dachaufbauten, wie die erfinderische Idee verwirklicht werden kann.

## Patentansprüche

1. Dach mit einer Wärmedämmung, bei dem Dacheindeckplatten (24) auf einem Dachstuhl verlegt sind und das Dach eine unter den Dacheindeckplatten befestigte wärmeisolierende Schicht (12; 26; 30; 51) mit als Latentspeicherelemente ausgestalteten wärmespeichernden Einheiten (14; 28; 40; 44; 46; 60; 80; 100) aufweist,
**dadurch gekennzeichnet,**
- daß die zumindest zwischen der wärmeisolierenden Schicht und den Dacheindeckplatten angeordneten wärmespeichernden Einheiten (14; 28; 40; 44; 46; 60; 80; 100) als Behälter ausgeführt sind, welche ein Latentspeichermaterial enthalten, das bei den im Tagesverlauf üblichen Temperaturschwankungen Phasenübergänge von flüssig zu fest und umgekehrt zeigt, und
- daß sich zwischen Dacheindeckplatten (24) und Latentspeicherelementen eine geringere Wärmeisolation vorgesehen ist als zwischen den innenliegenden Räumen und den den Latentspeicher enthaltenden Einheiten (14; 28; 40; 44; 46; 60; 80; 100).

2. Dach mit einer Wärmedämmung nach Anspruch 1,
**dadurch gekennzeichnet,**
daß als Latentspeichermaterial Salzhydrate oder eutektische Mischungen verwendet werden.

3. Dach mit einer Wärmedämmung nach Anspruch 1 oder 2,
**dadurch gekennzeichnet**,
daß als Latentspeichermaterial Essigsäure, CaCl₂ x 6H₂O oder Na₂SO₄ x 10H₂O verwendet werden.

4. Dach mit einer Wärmedämmung nach Anspruch 1,
**dadurch gekennzeichnet,**
daß das Latentspeicherelement (40, 44) in Wärmedämmplatten (12; 26; 30, 51) eingebettet ist oder an einer Seite von ihnen anliegt.

5. Dach mit einer Wärmedämmung nach Anspruch 4,
**dadurch gekennzeichnet**,
daß das Latentspeicherelement (14; 28; 40; 44; 46; 60; 80; 100), verschiedene Kammern mit verschiedenen Wärmespeichermedien enthält, die in Reihenfolge der Schmelzpunkte hintereinanderliegen, wobei das Material mit dem niedrigsten Schmelzpunkt an der Seite der Dacheindeckplatten (24) liegt.

6. Dach mit einer Wärmedämmung nach Anspruch 4,
**dadurch gekennzeichnet**,
daß die Latentspeicherelemente (40, 44) innerhalb der Wärmedämmplatten (30) liegen und in diese integriert sind.

7. Dach mit einer Wärmedämmung nach Anspruch 1,
**dadurch gekennzeichnet**,
daß die Wärmedämmung auch hausinnenseitig liegende Latentspeicherelemente (63) hat.

8. Dach mit einer Wärmedämmung nach Anspruch 1 oder 7,
**dadurch gekennzeichnet,**
daß die Latentspeicherelemente (14; 28; 40; 44; 46; 60; 63; 80; 100) mit Substanzen, insbesondere Ölen, zur Keimbildung geimpft sind.

9. Dach mit einer Wärmedämmung nach Anspruch 1,
**dadurch gekennzeichnet,**
daß die Latentspeicherelemente (14; 28; 40; 44; 46; 60; 80; 100) entweder an der Oberseite (72) oder an der Unterseite (73) oder an beiden Seiten eine Wellenform aufweisen.

10. Dach mit einer Wärmedämmung nach Anspruch 1,
**dadurch gekennzeichnet,**
daß die Latentspeicherelemente (14; 28; 40; 44; 46; 60; 80; 100) sowohl an Oberseite (72) als auch an Unterseite (73) eine Wellenform aufweisen, wobei die Richtung der Wellen unterschiedlich ist.

11. Dach mit einer Wärmedämmung nach Anspruch 9,
**dadurch gekennzeichnet**,
daß die Latentspeicherelemente (80, 100) einen dreieckigen Querschnitt haben, und einen abgebogenen Randstreifen (90) aufweisen, mit dem die Latentspeicherelemente (80, 100) firstseitig einhängbar sind.

12. Dach mit einer Wärmedämmung nach Anspruch 1,
**dadurch gekennzeichnet,**
daß die Latentspeicherelemente (100) Bälge (102) aufweisen, über die eine Volumenänderung bei Phasenänderung des Latentspeichermaterials ausgleichbar ist.

13. Dach mit einer Wärmedämmung nach Anspruch 1,
**dadurch gekennzeichnet,**
daß die Latentspeicherelemente (100) an Außenflächen, bei denen nur geringe Formänderungen durch phasenabhängige Volumenänderung des Latentspeichermaterials erlaubt sind, und ferner die mit Dacheindeckungsplatten (24) in Verbindung stehenden Flächen, durch Sicken (104) versteift sind.

14. Dach mit einer Wärmedämmung nach Anspruch 1,
**dadurch gekennzeichnet,**
daß zwischen den Latentspeicherelementen (100) und den übrigen Teilen der Dämmung Hohlräume (84) vorgesehen sind, in die sich das Latentspeichermaterial bei phasenabhängiger Volumenänderung ausdehnen kann.

## Claims

1. A roof having a thermal insulation in which roofing tiles (24) are layed on a roof framing and the roof featuring a thermally insulating layer (12; 26: 30; 51) secured under said roofing tiles with heat-storage units (14; 28; 40; 44; 46; 60; 80: 100) as latent storage elements
**characterized in that**
- said heat-storage units (14; 28; 40; 44; 46; 60; 80: 100) disposed at least between said thermally insulating layer and said roofing tiles are configured as containers, which contain a latent storage material that shows phase transitions from solid to liquid and vice-versa during the fluctuations in temperature as usual in the course of the day, and that
- between said roofing tiles (24) and said latent storage elements a thermal insulation is provided, less than that between the indoor rooms and said units (14; 28; 40; 44; 46; 60; 80: 100) containing the latent storage.

2. The roof having a thermal insulation as set forth in claim 1,
**characterized in that**
- as said latent storage material hydrates of salts or eutectic mixtures are used.

3. The roof having a thermal insulation as set forth in claim 1 or 2,
**characterized in that**
- as said latent storage material acetic acid, CaCl₂ x 6H₂O or Na₂SO₄ x 10H₂O are used.

4. The roof having a thermal insulation as set forth in claim 1,
**characterized in that**
- said latent storage element (40, 44) is embedded in thermal insulating panels or is in contact with one side of them.

5. The roof having a thermal insulation as set forth in claim 4,
**characterized in that**
- said latent storage element (14; 28; 40; 44; 46; 60; 80: 100) contains various chambers with various heat-storage media located in series in the sequence of the melting points, the material having the lowest melting point being located on the side of said roofing tiles (24).

6. The roof having a thermal insulation as set forth in claim 4,
**characterized in that**
- said latent storage elements (40; 44) lie within said thermal insulating panels (30) and are integrated therein.

7. The roof having a thermal insulation as set forth in claim 1,
**characterized in that**
- said thermal insulation also has latent storage elements located on the indoor side of the house.

8. The roof having a thermal insulation as set forth in claim 1 or 7,
**characterized in that**
- said latent storage elements (14; 28; 40; 44; 46; 60; 63; 80: 100) are seeded with substances, particularly oils, for nucleation.

9. The roof having a thermal insulation as set forth in claim 1,
**characterized in that**
- said latent storage elements (14; 28; 40; 44; 46; 60; 80: 100) feature a corrugated shape either on the upper side (72) or on the underside (73).

10. The roof having a thermal insulation as set forth in claim 1,
**characterized in that**
- said latent storage elements (14; 28; 40; 44; 46; 60; 80: 100) feature a corrugated shape on both the upper side (72) and on the underside (73), the orientation of the corrugation being different.

11. The roof having a thermal insulation as set forth in claim 9,
**characterized in that**
- said latent storage elements (80: 100) have a three-cornered cross-section and feature a down-bent edge strip (90) by means of which.said latent storage elements (80: 100) are attachable on the verge of the roof.

12. The roof having a thermal insulation as set forth in claim 1,
**characterized in that**
- said latent storage elements (100) feature bellows (102) by means of which changes in the volume and phase of the latent storage material are compensatable.

13. The roof having a thermal insulation as set forth in claim 1,
**characterized in that**
- said latent storage elements (100) on exterior surfaces for which only slight changes in shape due to a phase-dependent change in volume of the latent storage material are allowed, as well as surfaces connecting said roofing tiles (24) are stiffened by beading (104).

14. The roof having a thermal insulation as set forth in claim 1,
**characterized in that**
- between said latent storage elements (100) and the remaining parts of the insulation cavities (84) are provided into which the latent storage material on a phase-dependent change in volume is able to expand.

## Revendications

1. Toiture comprenant une isolation thermique, dans le cas de laquelle les plaques de couverture (24) sont posées sur une charpente et le toit présente une couche calorifuge (12 ; 26 30 ; 51) qui est fixée sous les plaques de couverture et qui est munie d'unités à accumulation thermique (14 ; 28 ; 40 ; 44 ; 46 ; 60 ; 80; 100) réalisées en tant qu'éléments d'accumulation à changement d'état, caractérisée en ce que les unités à accumulation thermique (14 ; 28 ; 40 ; 44 ; 46 ; 60 ; 80 ; 100) placées au moins entre la couche calorifuge et les plaques de couverture sont réalisées sous la forme de réservoirs qui contiennent une matière d'accumulation à changement d'état, laquelle présente, lors des variations de température survenant habituellement au cours de la journée, des transitions de phase de l'état liquide à l'état solide, et inversement, et en ce qu'entre les plaques de couverture (24) et les éléments d'accumulation à changement d'état est prévue une isolation thermique moins importante qu'entre les espaces intérieurs et les unités (14 ; 28 ; 40 ; 44 ; 46 ; 60 ; 80; 100) contenant l'accumulateur à changement d'état.

2. Toiture comportant une isolation thermique selon la revendication 1, caractérisée en ce que l'on utilise en tant que matière d'accumulation à changement d'état des hydrates de sel ou des mélanges eutectiques.

3. Toiture comportant une isolation thermique selon la revendication 1 ou 2, caractérisée en ce que l'on utilise en tant que matière d'accumulation à changement d'état de l'acide acétique, du CaCl₂ x 6H₂O ou du Na₂SO₄ x 10H₂O.

4. Toiture comportant une isolation thermique selon la revendication 1, caractérisée en ce que l'élément d'accumulation à changement d'état (40, 44) est logé dans des plaques calorifuges (12; 26 ; 30, 51) ou est appliqué sur l'un de leurs côtés.

5. Toiture comportant une isolation thermique selon la revendication 4, caractérisée en ce que l'élément d'accumulation à changement d'état (14; 28 ; 40 ; 44; 46 ; 60 ; 80 100) comprend différents espaces contenant différentes matières à accumulation thermique qui sont ordonnées les unes à la suite des autres en fonction de leur point de fusion, la matière présentant le point de fusion le plus bas étant située sur le côté des plaques de couverture (24).

6. Toiture comportant une isolation thermique selon la revendication 4, caractérisée en ce que les éléments d'accumulation à changement d'état (40, 44) se trouvent à l'intérieur des plaques calorifuges (30) et y sont intégrés.

7. Toiture comportant une isolation thermique selon la revendication 1, caractérisée en ce que l'isolation thermique comprend également des éléments d'accumulation à changement d'état (63) situés à l'intérieur du bâtiment.

8. Toiture comportant une isolation thermique selon la revendication 1 ou 7, caractérisée en ce que les éléments d'accumulation à changement d'état (14 ; 28; 40 ; 44 ; 46 ; 60 ;80 ; 100) sont, en vue d'une germination, dopés avec des substances, notamment des huiles.

9. Toiture comportant une isolation thermique selon la revendication 1, caractérisée en ce que les éléments d'accumulation à changement d'état (14 ; 28 ; 40; 44 ; 46 ; 60 ;80 ; 100) présentent une forme ondulée sur le dessus (72), sur le dessous (73) ou sur les deux côtés.

10. Toiture comportant une isolation thermique selon la revendication 1, caractérisée en ce que les éléments d'accumulation à changement d'état (14 ; 28 ; 40; 44 ; 46 ; 60 ; 80 100) présentent une forme ondulée à la fois sur le dessus (72) et sur le dessous (73), le sens des ondulations étant différent.

11. Toiture comportant une isolation thermique selon la revendication 9, caractérisée en ce que les éléments d'accumulation à changement d'état (80, 100) présentent une section transversale triangulaire et une bande périphérique recourbée (90) permettant d'accrocher les éléments d'accumulation à changement d'état (80, 100) au niveau du faîte.

12. Toiture comportant une isolation thermique selon la revendication 1, caractérisée en ce que les éléments d'accumulation à changement d'état (100) présentent des soufflets (102) permettant de compenser une modification du volume lorsque la matière d'accumulation à changement d'état change de phase.

13. Toiture comportant une isolation thermique selon la revendication 1, caractérisée en ce que les éléments d'accumulation à changement d'état (100) sont renforcés par des moulures (104) au niveau de surfaces extérieures dont la forme ne doit subir que de légères modifications dues à la variation du volume des éléments d'accumulation à changement d'état en fonction de la phase, et au niveau de surfaces qui sont reliées à des plaques de couverture (24).

14. Toiture comportant une isolation thermique selon la revendication 1, caractérisée en ce qu'entre les éléments d'accumulation à changement d'état (100) et les autres parties de l'isolation sont prévus des espaces vides (84) dans lesquels la matière d'accumulation à changement d'état peut se dilater lorsque son volume change en fonction de la phase.
